# EUROPÄISCHE PATENTSCHRIFT

(11) **EP 3 417 164 B1**
(45) Veröffentlichungstag und Bekanntmachung des Hinweises auf die Patenterteilung: **22.12.2021**
(21) Anmeldenummer: 17702092.2
(22) Anmeldetag: 30.01.2017
(51) Int. Cl.: F02M 21/02, F02D 19/02, F02M 21/04

(54) **BRENNKRAFTMASCHINE UND VERFAHREN ZUM BETREIBEN EINER BRENNKRAFTMASCHINE**
INTERNAL COMBUSTION ENGINE AND METHOD FOR OPERATING AN INTERNAL COMBUSTION ENGINE
MOTEUR À COMBUSTION INTERNE ET PROCÉDÉ PERMETTANT DE FAIRE FONCTIONNER UN MOTEUR À COMBUSTION INTERNE

(30) Priorität: 19.02.2016 DE 102016202612
(43) Veröffentlichungstag der Anmeldung: 26.12.2018
(73) Patentinhaber: Volkswagen Aktiengesellschaft, 38440 Wolfsburg (DE)
(72) Erfinder: HELTERHOF, Gunnar, 13437 Berlin (DE); WEISSNER, Michael, 38442 Wolfsburg (DE); SCHÜTTENHELM, Martin, 38108 Braunschweig (DE)
(86) Internationale Anmeldenummer: PCT/EP2017/051921
(87) Internationale Veröffentlichungsnummer: WO 2017/140480

(56) Entgegenhaltungen:
- DE-A1-102007 028 513
- FR-A1- 2 803 881
- JP-A- H08 144 860
- JP-A- H11 324 749
- JP-A- 2005 098 146
- US-A1- 2013 067 913
- US-A1- 2014 114 552

## Beschreibung

Die Erfindung betrifft eine Brennkraftmaschine mit einem für den Betrieb mit einem gasförmigen Kraftstoff vorgesehenen Verbrennungsmotor. Die Erfindung betrifft weiterhin ein Verfahren zum Betreiben einer solchen Brennkraftmaschine.

Mit gasförmigen Kraftstoffen betriebene Brennkraftmaschinen haben als Antriebsvorrichtungen für Kraftfahrzeuge zunehmend an Bedeutung gewonnen. Dies gilt insbesondere auch für mit Erdgas betriebene Brennkraftmaschinen. Ein wesentlicher Grund dafür liegt in den im Vergleich zu Ottomotoren um ca. 25% geringeren CO₂-Emissionen, die insbesondere in dem besseren Wasserstoff-Kohlenstoff-Verhältnis von Erdgas von 4 : 1 im Vergleich zu 2 : 1 von Ottokraftstoff begründet sind.

Der verbrennungsspezifische Hauptnachteil von Erdgas (und anderen gasförmigen Kraftstoffen) im Vergleich zu flüssigen Kraftstoffen, nämlich der geringere Luftliefergrad aufgrund der Verdrängung von angesaugter Luft durch das gasförmige und damit ein relativ großes Volumen einnehmende Erdgas, der bei Brennkraftmaschinen ohne Aufladung zu einer um ca. 10% bis 15% geringeren Leistung führt, kann in der Regel aufgrund der extrem hohen Klopffestigkeit von Erdgas, die bis zu 130 ROZ beträgt, durch eine entsprechend höhere Verdichtung in Kombination mit einer Aufladung kompensiert oder sogar überkompensiert werden.

Als Kraftstoff wird Erdgas in hoch verdichteter Form unter der Bezeichnung CNG (Compressed Natural Gas) verwendet. Das Erdgas wird dazu unter einem Druck von ca. 200 bar in einem oder mehreren Kraftstoffdrucktanks gespeichert, um möglichst viel Erdgas in den aus Gewichtsgründen und aus Gründen des begrenzten Bauraums in Kraftfahrzeugen hinsichtlich ihrer Tankvolumina eingeschränkten Kraftstoffdrucktanks speichern zu können, so dass zumindest akzeptable Reichweiten für die damit angetriebenen Kraftfahrzeugen erreicht werden können.

Mit Erdgas betriebene Brennkraftmaschinen, die als Antriebsmotoren für Kraftfahrzeuge vorgesehen sind, werden derzeit in drei verschiedenen Varianten angeboten.

Die sogenannten bivalenten Brennkraftmaschinen können alternativ mit Erdgas oder Ottokraftstoff betrieben werden, wobei für beide Kraftstoffarten in der Regel vergleichsweise große Tankvolumina bereitgehalten werden. Die Auslegung der Brennkraftmaschinen erfolgt dabei in der Regel als möglichst optimaler Kompromiss für den Betrieb mit beiden Kraftstoffarten. Nachteilig daran ist, dass dadurch das Potenzial, das Erdgas als Kraftstoff bietet, nicht optimal ausgeschöpft werden kann.

Die sogenannten quasi-monovalenten Brennkraftmaschinen sind dagegen primär für den Betrieb mit Erdgas ausgelegt, können jedoch weiterhin auch mit Ottokraftstoff betrieben werden, weil dafür eigene Kraftstoffversorgungssysteme vorgesehen sind. Die für den Ottokraftstoff vorgesehenen Tanks weisen dabei jedoch in der Regel sehr kleine Tankvolumina auf und ihre Inhalte dienen lediglich als Reserven, um die Gesamtreichweiten für die mittels dieser Brennkraftmaschinen angetriebenen Kraftfahrzeuge zu erhöhen und insbesondere zu ermöglichen, eine der häufig noch relativ wenig verbreiteten Tankstellen, die Erdgas als Kraftstoff anbieten, zu erreichen. Offensichtlicher Vorteil solcher quasi-monovalenter Brennkraftmaschinen liegt in der Möglichkeit, das Potenzial, das Erdgas als Kraftstoff bietet, möglichst optimal ausschöpfen zu können, ohne auf die Reichweite, die lediglich das als Kraftstoff mitgeführte Erdgas ermöglicht, beschränkt zu sein. Nachteilig an solchen Brennkraftmaschinen ist jedoch die Notwendigkeit, zwei unterschiedliche Kraftstoffversorgungssysteme vorsehen zu müssen, wodurch insbesondere die Kosten erhöht werden. Dieser Nachteil gilt selbstverständlich auch für bivalente Brennkraftmaschinen.

Monovalente Brennkraftmaschinen sind dagegen ausschließlich für einen Betrieb mit Erdgas vorgesehen und können dadurch ebenfalls möglichst optimal an dessen Eigenschaften angepasst werden. Zudem werden für solche Brennkraftmaschine der zusätzliche Aufwand und damit die Kosten sowie der Bauraum für ein zusätzliches Kraftstoffversorgungssystem für Ottokraftstoff vermieden.

Neben dem Problem ausreichender Reichweiten ergibt sich bei Kraftfahrzeugen mit monovalenten Brennkraftmaschinen eine Kaltstartproblematik, die zum einen aus der Speicherung des Erdgases unter hohem Druck von regelmäßig ca. 200 bar in den Kraftstoffdrucktanks und der dadurch erforderlichen Entspannung mittels einer Druckregelvorrichtung auf Werte von ca. 10 bar, die für das Einblasen des Kraftstoffs in beispielsweise ein Saugrohr der Brennkraftmaschine vorgesehen sind, resultiert. Aufgrund des Joule-Thomson-Effekts ist diese Entspannung des Erdgases mit einer erheblichen Temperaturabsenkung verbunden. Dabei kann das Erdgas stromab der Druckregelvorrichtung selbst bei hohen Umgebungstemperaturen Werte von ca. - 25°C aufweisen. Dies führt dazu, dass solche Druckregelvorrichtungen regelmäßig beheizt werden müssen, wozu diese zumeist in das Kühlsystem der Brennkraftmaschine integriert sind. Eine solche Beheizung für eine Druckregelvorrichtung ist jedoch erst wirksam, wenn das Kühlmittel des Kühlsystems eine ausreichend hohe Temperatur aufweist, was nach einem Kaltstart der Brennkraftmaschine bei sehr kalten Umgebungstemperaturen erst verzögert gegeben ist. Weiterhin wirken sich Temperaturen, die deutlich unter 0°C liegen, auch grundsätzlich negativ auf die Funktionsfähigkeit der Komponenten des Kraftstoffversorgungssystems aus. Als problematisch können sich dabei insbesondere Wasser, das während eines vorausgegangenen Betriebs der Brennkraftmaschine in dem Frischgasstrang und insbesondere dem Saugrohr kondensiert ist und das bei entsprechend niedrigen Außentemperaturen vereist, sowie Ablagerungen von Schmiermittel im Frischgasstrang zeigen. Das Schmiermittel kann dabei insbesondere von einem in den Frischgasstrang integrierten Verdichter der Brennkraftmaschine stammen und bei niedrigen Außentemperaturen eine entsprechend hohe Viskosität aufweisen. Eine solche Vereisung von Wasser sowie Ablagerungen von Schmiermittel können insbesondere den Betrieb von Gaseinblasventilen, über die das Erdgas dosiert in beispielsweise ein Saugrohr der Brennkraftmaschine eingeblasen werden soll, negativ beeinflussen.

Elektrisch beheizbare Gaseinblasventile (vgl. JP 2005 098146 A) könnten hier Abhilfe schaffen. Solche Gaseinblasventile sind jedoch bislang nicht als Großserienkomponenten und damit mit vertretbaren Stückkosten erhältlich. Weiterhin würde eine dem Start der Brennkraftmaschine vorgeschaltete Aufwärmphase für die Gaseinblasventile den Startvorgang verzögern. Hinzu kommt der erforderliche Aufwand für die betriebssichere Ausgestaltung von elektrisch beheizbaren Gaseinblasventilen, die während der Aufwärmphase bereits mit Erdgas in Kontakt stehen.

Für bivalente und quasi-monovalente Brennkraftmaschinen wird die beschriebene Kaltstartproblematik vermieden, indem diese nach einem Kaltstart zunächst mit Ottokraftstoff betrieben werden.

Eine mit CNG betriebene Brennkraftmaschine ist beispielsweise aus der WO 2006/084583 A1 bekannt.

Aus der EP 0 350 795 A2 ist ein Gasmotor bekannt, bei dem der Kraftstoff (LPG) in flüssiger Form in einem Kraftstofftank gespeichert wird. Über einen Hebel kann manuell zwischen einer direkten Verbindung zwischen dem Kraftstofftank und dem Saugrohr des Gasmotors einerseits und einer Verbindung dieser Komponenten über einen Druckregelventil andererseits umgeschaltet werden. Die direkte Verbindung ist zur Verbesserung des Kaltstartverhaltens bei kalten Umgebungsbedingungen vorgesehen, da durch die Umgehung des Druckregelventils der Unterdruck in dem Saugrohr genutzt werden könne, um den Übergang des Kraftstoffs von der flüssigen in die gasförmige Phase beim Austritt aus dem Kraftstofftank zu unterstützen.

Auch die US 2011/0214644 A1 beschäftigt sich mit dem möglichen Problem eines schlechten Phasenübergangs von flüssig zu gasförmig bei der Verwendung von LPG beim Kaltstart unter kalten Umgebungsbedingungen. Dieses Problem soll dadurch vermieden werden, dass den Injektoren bei entsprechenden Kaltstartbedingungen der Kraftstoff mittels eines aktiv ansteuerbaren Kaltstartventils chargenweise zur Verfügung gestellt wird.

Brennkraftmaschinen, bei denen gasförmiger Kraftstoff Brennräumen eines Verbrennungsmotors sowohl über den einzelnen Brennräumen zugeordnete Gaseinblasventile als auch über eine zusätzliche Einleitung in den Frischgasstrang zugeführt werden kann, sind aus der US 2014/114552 A1 sowie der FR 2 803 881 A1 bekannt.

Die JP H08 144860 A1 beschreibt eine Brennkraftmaschine, bei dem ein gasförmiger Kraftstoff einerseits über ein Gaseinblasventil und andererseits über eine zusätzliche Zuleitung in einen Frischgasstrang der Brennkraftmaschine eingebracht werden kann.

Ausgehend von diesem Stand der Technik lag der Erfindung die Aufgabe zugrunde, auf möglichst einfache Weise auch bei kalten Umgebungstemperaturen ein ausreichend gutes Kaltstartverhalten für eine mit einem gasförmigen Kraftstoff, insbesondere mit Erdgas betriebene Brennkraftmaschine zu ermöglichen.

Diese Aufgabe wird mittels einer Brennkraftmaschine gemäß dem Patentanspruch 1 gelöst. Ein Verfahren zum Betreiben einer solchen Brennkraftmaschine ist Gegenstand des Patentanspruchs 7. Vorteilhafte Ausgestaltungen der erfindungsgemäßen Brennkraftmaschine und bevorzugte Ausführungsformen des erfindungsgemäßen Verfahrens sind Gegenstände der weiteren Patentansprüche und ergeben sich aus der nachfolgenden Beschreibung der Erfindung.

Der Erfindung liegt der Gedanke zugrunde, die Kaltstartproblematik bei einer mit einem gasförmigen Kraftstoff und insbesondere Erdgas betriebenen Brennkraftmaschine, die auf temperaturbedingt nicht oder schlecht funktionierende Gaseinblasventile zurückzuführen ist, dadurch zu vermeiden, dass diese Gaseinblasventile temporär umgangen werden und der in dieser Phase für den Betrieb der Brennkraftmaschine vorgesehene Kraftstoff direkt, d.h. ohne Nutzung der Gaseinblasventile, in den Frischgasstrang eingebracht wird. Nicht oder schlecht funktionierende Gaseinblasventile können dann die Kraftstoffzufuhr zu einem Verbrennungsmotor der Brennkraftmaschine nicht behindern. Nachteilig daran ist gegebenenfalls, dass durch den Verzicht auf die Gaseinblasventile während dieser Kaltstartphase eine Dosierung des Kraftstoffs nicht mit einer entsprechenden Genauigkeit erfolgen kann, was jedoch wegen der nur temporär vorgesehenen Maßnahme akzeptabel sein kann. Der Betrieb der Brennkraftmaschine während dieser Kaltstartphase, bei der die Zufuhr an Kraftstoff zu dem Verbrennungsmotor unter Umgehung der eigentlich hierfür vorgesehenen Gaseinblasventile erfolgt, kann dann vorzugsweise dazu genutzt werden, die Gaseinblasventile zu beheizen, um diese möglichst schnell in einen ausreichend funktionsfähigen Zustand zu überführen, so dass der Betrieb der Brennkraftmaschine dann auf eine Dosierung des Kraftstoffs mittels der Gaseinblasventile umgeschaltet werden kann.

Dementsprechend ist eine Brennkraftmaschine vorgesehen, die zumindest einen für den Betrieb mit einem gasförmigen Kraftstoff vorgesehenen Verbrennungsmotor, dem über einen Frischgasstrang Frischgas (insbesondere Luft) zuführbar ist, und die weiterhin einen oder mehrere Kraftstoffdrucktanks (in dem/denen der Kraftstoff vorzugsweise gasförmig gespeichert ist) sowie einen oder mehrere Gaseinblasventile, die über eine Druckregelvorrichtung mit dem oder den Kraftstoffdrucktanks verbindbar sind, umfasst. Weiterhin ist ein Schaltventil vorgesehen, durch das der Kraftstoff in einer ersten Schaltstellung über eine erste Zuführleitung zu dem/den Gaseinblasventil(en) und in einer zweiten Schaltstellung über eine das/die Gaseinblasventil(e) umgehende (d.h. nicht integrierende) zweite Zuführleitung in den Frischgasstrang führbar ist. Für einen möglichst automatischen Betrieb der erfindungsgemäßen Brennkraftmaschine weist diese zudem eine Steuerungsvorrichtung zur automatischen Ansteuerung (zumindest) des Schaltventils auf, wobei die Steuerungsvorrichtung derart ausgelegt beziehungsweise programmiert ist, dass mittels dieser ein erfindungsgemäßes Verfahren umsetzbar ist beziehungsweise umgesetzt wird. Dabei kann die Steuerungsvorrichtung insbesondere (zumindest) auf die Messwerte zumindest eines, vorzugsweise von mehreren Temperatursensoren zurückgreifen, mittels derer eine Betriebstemperatur der Brennkraftmaschine beziehungsweise zumindest einer Komponente davon (beispielsweise die Temperatur eines Kühlmittels in zumindest einem Abschnitt eines Kühlsystems der Brennkraftmaschine) und/oder die Umgebungstemperatur, insbesondere die Umgebungslufttemperatur, ermittelt werden kann.

Ein erfindungsgemäßes Verfahren zum Betreiben einer solchen Brennkraftmaschine sieht vor, dass der Kraftstoff dem Verbrennungsmotor während eines Warmbetriebs der Brennkraftmaschine ausschließlich über die erste Zuführleitung sowie das/die Gaseinblasventil(e) und während eines Kaltbetriebs ausschließlich über die zweite Zuführleitung zugeführt wird.

Als "Kaltbetrieb" wird dabei ein Betrieb der Brennkraftmaschine verstanden, bei dem diese oder zumindest eine Komponente der Brennkraftmaschine noch eine Betriebstemperatur aufweist, die unterhalb eines dazugehörigen (ersten) Grenzwerts liegt, und bei dem zudem die Umgebungstemperatur unterhalb eines dazugehörigen (zweiten) Grenzwerts, der beispielsweise bei - 10 °C oder - 15 °C oder - 20 °C liegen kann, liegt. Dabei kann insbesondere vorgesehen sein, dass sich ein Kaltbetrieb unmittelbar an einen Start der Brennkraftmaschine bei entsprechend kalten Umgebungstemperaturen anschließt, wobei die Brennkraftmaschine zuvor solange nicht im Betrieb war, dass sich deren (Betriebs-)Temperatur bis unterhalb des dazugehörigen (ersten) Grenzwerts abgesenkt hat. Als "Warmbetrieb" wird dagegen ein Betrieb der Brennkraftmaschine verstanden, bei dem zumindest eine für den Kaltbetrieb vorgesehene Bedingung nicht erfüllt ist.

Bei dem gasförmigen Kraftstoff kann es sich insbesondere um Erdgas handeln, wobei dieser weiterhin bevorzugt in dem oder den Kraftstoffdrucktanks gasförmig unter einem relativ hohen Druck von beispielsweise zwischen ca. 150 bar und ca. 250 bar, vorzugsweise von ca. 200 bar gespeichert sein kann (CNG).

In einer bevorzugten Ausgestaltung der erfindungsgemäßen Brennkraftmaschine kann vorgesehen sein, dass das Schaltventil stromab der Druckregelvorrichtung angeordnet ist. Dadurch kann vermieden werden, in die das/die Gaseinblasventil(e) umgehende zweite Zuführleitung eine separate Druckregelvorrichtung integrieren zu müssen. Zudem kann sich die konstruktive Ausgestaltung des Schaltventils vereinfachen, wenn dieses für die deutlich geringeren Gasdrücke stromab der Druckregelvorrichtung ausgelegt werden kann.

Weiterhin bevorzugt kann vorgesehen sein, dass das/die Gaseinblasventil(e) in ein Saugrohr des Frischgastrangs integriert sind. Dabei kann insbesondere vorgesehen sein, dass jedem Brennraum des Verbrennungsmotors beziehungsweise jedem zu einem solchen Brennraum führenden Einlasskanal (des Verbrennungsmotors), der sich an das Saugrohr in Strömungsrichtung des Frischgases beziehungsweise des Frischgas-Kraftstoff-Gemischs anschließt, mindestens ein Gaseinblasventil zugeordnet ist. Gegenüber einer zentralen Einlassung in das Saugrohr beziehungsweise in einen Abschnitt des Frischgasstrangs stromauf des Saugrohrs (stromauf oder stromab einer darin gegebenenfalls angeordneten Drosselklappe) kann auf diese Weise eine verbesserte Dosierung des den einzelnen Brennräumen zuzuführende Kraftstoffs erfolgen. Weiterhin besteht auch die Möglichkeit, den Kraftstoff mittels der Gaseinblasventile direkt in die Brennräume einzublasen, wozu diese in einen Zylinderkopf des Verbrennungsmotors integriert sein können. Ein Vorteil, der sich jedoch aus der Integration der Gaseinblasventile in den Frischgasstrang ergeben kann, liegt in der konstruktiv einfacheren Ausgestaltung der Gaseinblasventile, weil diese dann nicht direkt den in den Brennräumen ablaufenden Verbrennungsprozessen und insbesondere den damit verbundenen hohen Temperaturen und Drücken ausgesetzt sind.

Für eine möglichst gute und dennoch auch bei sehr kalten Umgebungstemperaturen unproblematische Zumischung des Kraftstoffs in das in dem Frischgasstrang strömende Frischgas kann vorzugsweise vorgesehen sein, dass die zweite Zuführleitung in einen Venturi-Mischer des Frischgasstrangs mündet.

Wie bereits beschrieben wurde, kann in einer bevorzugten Ausführungsform des erfindungsgemäßen Verfahrens vorgesehen sein, dass das/die Gaseinblasventil(e) (zumindest temporär) während des Kaltbetriebs beheizt wird/werden. Auf diese Weise kann eine ausreichende Funktionsfähigkeit des oder der Gaseinblasventile möglichst schnell hergestellt werden, so dass ein Umschalten des Betriebs der Brennkraftmaschine auf ein Einblasen des Kraftstoffs mittels des oder der Gaseinblasventile möglichst kurzfristig erfolgen kann.

Insbesondere für ein solches Beheizen des oder der Gaseinblasventile kann vorteilhaft sein, wenn diese währenddessen möglichst nicht mit dem gasförmigen Kraftstoff beaufschlagt sind. Daher kann weiterhin bevorzugt vorgesehen sein, den Kraftstoff dann möglichst vollständig aus der ersten Zuführleitung, die das Schaltventil mit dem oder den Gaseinblasventilen verbindet, zu evakuieren. Dies kann vorzugsweise unmittelbar zu Beginn eines Betriebs der Brennkraftmaschine mit einer Zuführung des Kraftstoffs über die zweite Zuführleitung erfolgen. Hierzu kann die erfindungsgemäße Brennkraftmaschine in einer bevorzugten Ausgestaltung eine dritte Schaltstellung des Schaltventils vorsehen, in der die erste Zuführleitung mit der zweite Zuführleitung verbunden und vorzugsweise auch eine Verbindung mit dem oder den Kraftstoffdrucktanks verschlossen ist. Auf diese Weise kann zunächst der in der ersten Zuführleitung noch enthaltene Kraftstoff über das in der dritten Schaltstellung befindliche Schaltventil sowie die zweite Zuführleitung in den Frischgasstrang eingebracht werden, bevor ein Umschalten des Schaltventils in die zweite Schaltstellung erfolgt, in der dann Kraftstoff aus dem oder den Kraftstoffdrucktanks über die Druckregelvorrichtung, das Schaltventil und die zweite Zuführleitung dem Verbrennungsmotor zugeführt wird. Daran anschließend kann dann das Umschalten des Schaltventils in die erste Schaltstellung erfolgen, so dass dann ein "Normalbetrieb" für die Brennkraftmaschine vorgesehen wird, bei dem der Kraftstoff mittels des oder der Gaseinblasventile dem Verbrennungsmotor zugeführt wird.

Ein Beheizen der Gaseinblasventile, insbesondere nach einer Evakuierung der ersten Zuführleitung, kann in vorteilhafter Weise durch eine Ansteuerung erfolgen, bei der diesen möglichst viel elektrische Energie zugeführt wird, die von diesen in Wärmeenergie umgewandelt wird. Dabei kann insbesondere vorgesehen sein, dass das oder die Gaseinblasventile kontinuierlich voll bestromt werden (d.h. eine Ansteuerung erfolgt zumindest mit einer Stromstärke, die im Normalbetrieb der Brennkraftmaschine (temporär) für ein Öffnen des oder der Gaseinblasventile vorgesehen ist), was insbesondere auch zu einem dauerhaften Öffnen und Offenhalten des oder der Gaseinblasventile führen kann. Bei einer zuvor erfolgten Evakuierung der ersten Zuführleitung führt ein solches Öffnen oder Offenhalten dann in der Regel auch nicht zu einer negativen Beeinflussung der Dosierung des gleichzeitig über die zweite Zuführleitung unter Umgehung des oder der Gaseinblasventile zugeführten Kraftstoffs und insbesondere nicht zu einem ungewollt fetten Betrieb des Verbrennungsmotors. Andererseits kann auch vorgesehen sein, das oder die Gaseinblasventile nur so stark (insbesondere dauerhaft) zu bestromen, dass ein Öffnen (gerade noch) nicht erfolgt. In diesem Fall kann insbesondere auch eine vorhergehende Evakuierung der ersten Zuführleitung entfallen, ohne dass negative Auswirkungen auf die Dosierung des Kraftstoffs zu erwarten sind. Alternativ dazu kann auch vorgesehen sein, das oder die Gaseinblasventile mit Impulsen mit insbesondere voller Stromstärke zu bestromen, wobei insbesondere die Frequenz derart hoch gewählt ist, dass infolge der mechanischen Trägheit des oder der Gaseinblasventile ein Öffnen im Relevanten Ausmaß verhindert wird.

Um trotz der Umgehung des oder der Gaseinblasventile während des Kaltbetriebs der Brennkraftmaschine eine möglichst genaue Dosierung des in den Frischgasstrang eingebrachten Kraftstoffs zu ermöglichen, kann in einer bevorzugten Ausführungsform des erfindungsgemäßen Verfahrens vorgesehen sein, dass während des Kaltbetriebs eine Steuerung (und insbesondere Regelung) der Menge des in den Frischgasstrang eingebrachten Kraftstoffs mittels einer entsprechenden Ansteuerung des Druckregelventils und/oder eines oder mehrerer Tankregelventile, die der Kraftstofftank umfasst oder die Kraftstoffdrucktanks umfassen, erfolgt.

Die Steuerungsvorrichtung der erfindungsgemäßen Brennkraftmaschine kann weiterhin zur automatischen Ansteuerung, soweit vorhanden, des oder der Gaseinblasventile, des Druckregelventils und/oder des oder der Tankregelventile ausgelegt beziehungsweise programmiert sein, so dass mittels dieser ein erfindungsgemäßes Verfahren gemäß den verschiedenen Ausführungsformen umsetzbar ist beziehungsweise umgesetzt wird. Die Erfindung betrifft weiterhin ein Kraftfahrzeug mit einer erfindungsgemäßen Brennkraftmaschine, wobei die Brennkraftmaschine vorzugsweise zur (direkten oder indirekten) Bereitstellung der Antriebsleistung für das Kraftfahrzeug vorgesehen sein kann.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt, jeweils in schematischer Darstellung:
- Fig. 1:: ein erfindungsgemäßes Kraftfahrzeug; und
- Fig. 2:: eine erfindungsgemäße Brennkraftmaschine.

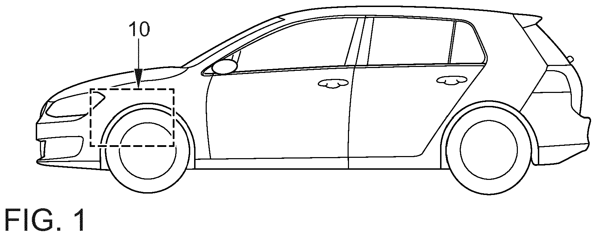

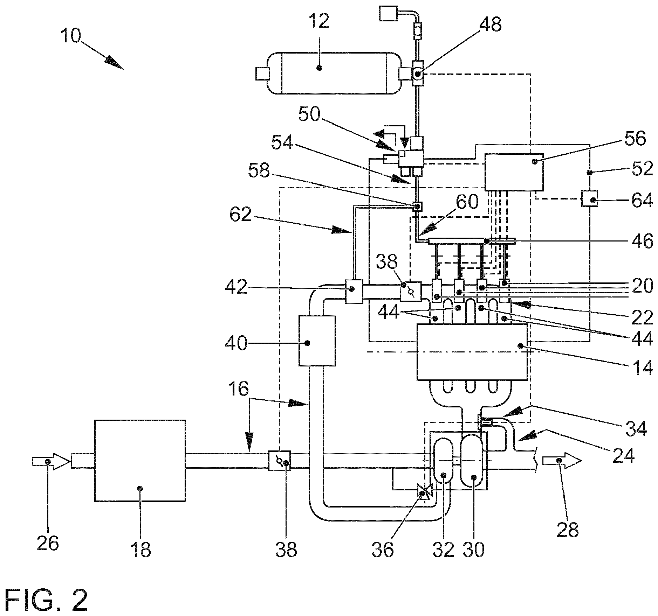

Die Fig. 1 zeigt ein Kraftfahrzeug mit einer erfindungsgemäßen Brennkraftmaschine 10, die der direkten Erzeugung einer Fahrantriebsleistung für das Kraftfahrzeug dient. Die Brennkraftmaschine 10 kann dabei gemäß der Fig. 2 ausgebildet sein.

Die in der Fig. 2 dargestellte Brennkraftmaschine 10 ist mit Erdgas, das in einem (oder mehreren parallel geschalteten) Kraftstoffdrucktank(s) 12 unter einem relativ hohen Druck von beispielsweise ca. 200 bar gespeichert ist, betreibbar.

Die Brennkraftmaschine 10 umfasst einen nach dem Otto-Prinzip betreibbaren (Hubkolben-)Verbrennungsmotor 14 dessen grundsätzlicher Aufbau allgemein bekannt ist. Der Verbrennungsmotor 14 wird über einen Frischgasstrang 16 mit Frischgas, bei dem es sich primär um über einen Luftfilter 18 angesaugte Umgebungsluft 26 handelt, versorgt. In den zu dem Verbrennungsmotor 14 strömenden Frischgasstrom kann mittels Gaseinblasventilen 20, die in ein Saugrohr 22 des Frischgasstrangs 16 integriert sind, dosiert Erdgas eingebracht werden. Die so erzeugte Frischgas-Kraftstoff-Mischung kann dann in dem Verbrennungsmotor 14 verbrannt werden, um mechanische Antriebsleistung bereitzustellen. Das bei der Verbrennung des Frischgas-Kraftstoff-Gemischs entstehende Abgas 28 wird über einen Abgasstrang 24 der Brennkraftmaschine 10 abgeführt und dabei zumindest teilweise über eine Turbine 30 eines Abgasturboladers geführt, wodurch Antriebsleistung für einen Verdichter 32 des Abgasturboladers erzeugt wird. Der Verdichter 32 des Abgasturboladers ist in den Frischgasstrang 16 integriert und dient dazu, dass dem Verbrennungsmotor 14 zuzuführende Frischgas mit dem Ziel einer Aufladung der Brennkraftmaschine 10 zu verdichten. Mittels eines sogenannten Wastegates 34 zur bedarfsweisen (teilweisen) Umgehung der Turbine 30 und/oder mittels eines Umluftventils 36, das der Vermeidung eines zu großen Druckaufbaus stromab des Verdichters 32 bei geschlossener Drosselklappe 38 dient, wird der von dem Verdichter 32 erzeugte Ladedruck bei einem Betrieb des Verbrennungsmotors 14 mit hoher Last begrenzt und eine Überbelastung des Abgasturboladers und des Verbrennungsmotors 14 verhindert. Das von dem Verdichter 32 verdichtete Frischgas strömt durch eine Ladeluftstrecke, d.h. den stromab des Verdichters 32 angeordneten Abschnitt des Frischgasstrangs 16, und durchströmt dabei zunächst einen Ladeluftkühler 40, dann einen Venturi-Mischer 42, der in einem Kaltbetrieb der Brennkraftmaschine 10 der Zumischung des unter Umgehung der Gaseinblasventile 20 dem Frischgas zugeführten Kraftstoffs dient, und daraufhin die Drosselklappe 38, die der quantitativen Lastregelung des Verbrennungsmotors 14 dient. Anschließend strömt der Kraftstoff in das Saugrohr 22, das den letzten Abschnitt des Frischgasstrangs 16 darstellt und in dem die Frischgasströmung auf Teilströmungen, die den einzelnen Brennräumen des Verbrennungsmotors 14 zugeführt werden, aufgeteilt wird, wozu das Saugrohr 22 eine der Anzahl an Zylindern (nicht dargestellt) des Verbrennungsmotors 14 entsprechende Anzahl an Gasführungskanälen 44 ausbildet. Jeweils ein Gaseinblasventil 20 ist jedem der Gasführungskanäle 44 zugeordnet und in einen Anfangsabschnitt des jeweils dazugehörigen Gasführungskanals 44 integriert. Mittels der Gaseinblasventile 20 kann folglich eine für jeden der u.a. von den Zylindern des Verbrennungsmotors 14 begrenzten Brennräume spezifische Kraftstoffmenge dosiert werden, um eine möglichst optimale und insbesondere effiziente Verbrennung zu erreichen.

Das mittels der Gaseinblasventile 20 in einem Warm- beziehungsweise Normalbetrieb dem Frischgas zugemischte Erdgas wird den Gaseinblasventilen 20 über ein Gasverteilerrohr 46, ein sogenanntes Gasrail, zugeführt. Dabei weist das Erdgas innerhalb des Gasverteilerrohrs 46 einen Druck von beispielsweise ca. 10 bar auf, wobei die Entspannung des bei ca. 200 bar in dem oder den Kraftstoffdrucktanks 12 gespeicherten Erdgases bis auf diesen Druck von ca. 10 bar zum einen mittels jeweils eines jedem Kraftstoffdrucktank 12 zugeordneten Tankregelventils 48 sowie (primär) mittels einer Druckregelvorrichtung 50 erfolgt. Aufgrund des Joule-Thomson-Effekts ist die Druckregelvorrichtung 50 auf ihrer Niederdruckseite infolge der durch diese bewirkten erheblichen Entspannung mit Erdgas beaufschlagt, das auch im Warmbetrieb der Brennkraftmaschine 10 bei relativ hohen Umgebungstemperaturen eine sehr niedrige Temperatur von weit unter 0°C aufweisen kann. Um dennoch eine sichere Funktion der Druckregelvorrichtung 50 zu gewährleisten, ist diese beheizbar ausgeführt und dazu in einen Kühlkreis eines in der Fig. 2 lediglich stark vereinfacht dargestellten Kühlsystems 52 der Brennkraftmaschine 10 integriert, durch das die Druckregelvorrichtung 50 zumindest im Warmbetrieb der Brennkraftmaschine 10 mit einer Kühlflüssigkeit durchströmt wird, deren Temperatur deutlich oberhalb der Temperatur des auf der Niederdruckseite der Druckregelvorrichtung 50 vorliegenden Erdgases und in der Regel auch deutlich oberhalb der Umgebungstemperatur liegt.

Stromab der Druckregelvorrichtung 50 ist in eine Erdgasverteilerleitung 54 ein mittels einer Steuerungsvorrichtung 56, im vorliegenden Fall der zentralen Motorsteuerung 56 der Brennkraftmaschine 10, betätigbares Schaltventil 58 integriert, durch das in Abhängigkeit von seiner Schaltstellung das mittels der Druckregelvorrichtung 50 entspannte Erdgas entweder (in einer ersten Schaltstellung) über eine erste Zuführleitung 60 zu den Gaseinblasventilen 20 oder (in einer zweiten Schaltstellung) über eine zweite Zuführleitung 62 zu dem Venturi-Mischer 42 geführt wird.

Die zweite Schaltstellung ist während eines Kaltbetriebs der Brennkraftmaschine 10 vorgesehen. Dieser Kaltbetrieb liegt nach einem Kaltstart der Brennkraftmaschine 10 vor, wenn somit die Betriebstemperatur der Brennkraftmaschine 10, die anhand der Temperatur des in dem Kühlsystem 52 strömenden Kühlmittels, die an einer oder mehreren Stellen mittels (jeweils) eines Temperatursensors 64 gemessen wird, definiert ist, unterhalb eines (ersten) Grenzwerts (z.B. 10°C) liegt. Weiterhin ist der Kaltbetrieb der Brennkraftmaschine 10 noch dadurch gekennzeichnet, dass auch die Umgebungstemperatur unterhalb eines (zweiten) Grenzwerts (z.B. ― 10°C) liegt. Da während eines solchen Kaltbetriebs eine sichere Funktion der Gaseinblasventile 20 nicht gegeben ist, ist vorgesehenen, diese bei der Zuführung des Erdgases zu dem Verbrennungsmotor 14 zu umgehen und das für den Betrieb des Verbrennungsmotors 14 erforderliche Erdgas über die zweite Zuführleitung 62 unter Verwendung des in den Frischgasstrang 16 integrierten Venturi-Mischers 42 dem in dem Frischgasstrang 16 strömenden Frischgas zuzumischen, so dass während des Kaltbetriebs ein zwar hinsichtlich der Feindosierung des Erdgases eingeschränkter, jedoch sicherer Betrieb des Verbrennungsmotors 14 realisiert werden kann. Gleichzeitig können die Gaseinblasventile 20 beheizt werden, um diese möglichst schnell auf eine Betriebstemperatur zu bringen, die ihren sicheren Betrieb gewährleistet, so dass dann das Schaltventil 58 in die erste Schaltstellung geschaltet werden kann, um die Brennkraftmaschine 14 im Warm- beziehungsweise Normalbetrieb zu betreiben.

Optional kann vorgesehen sein, in einer Anfangsphase des Kaltbetriebs das Schaltventil 58 in eine dritte Schaltstellung zu schalten, in der die erste Zuführleitung 60 mit der zweiten Zuführleitung 62 verbunden und eine Verbindung mit der Druckregelvorrichtung 50 (über die Erdgasverteilerleitung 54) und damit mit dem oder den Kraftstoffdrucktanks 12 verschlossen ist. Auf diese Weise kann zunächst das sich noch aufgrund eines vorausgegangenen Betriebs der Brennkraftmaschine 10 innerhalb der ersten Zuführleitung 60 befindliche Erdgas möglichst weitgehend über die zweite Zuführleitung 62 in den Frischgasstrang 16 abgeführt werden, um während des Beheizens der Gaseinblasventile 20 eine Anwesenheit von Erdgas möglichst weitgehend zu vermeiden.

Ein Beheizen der Gaseinblasventile 20 kann dadurch erfolgen, dass diese mittels der Motorsteuerung 56 derart angesteuert werden, dass diesen möglichst viel elektrische Energie zugeführt wird, die weitgehend vollständig in Wärmeenergie umgewandelt wird. Hierzu kann insbesondere vorgesehen sein, die Gaseinblasventile 20 beziehungsweise in diese integrierte Aktoren dauerhaft mit zumindest einer Stromstärke zu beaufschlagen, die im Normalbetrieb (temporär) für ein Öffnen der Gaseinblasventile 20 vorgesehen ist.

Sofern für das Schaltventil 58 lediglich zwei Schaltstellungen (die erste und die zweite Schaltstellung) vorgesehen sind, kann dieses vorzugsweise als 3/2-Wegeventil ausgebildet und gemäß der Fig. 2 in die Verzweigung integriert sein, in der sich die Erdgasverteilerleitung 54 in die erste Zuführleitung 60 und die zweite Zuführleitung 62 aufteilt. Bei drei Schaltstellungen (die erste bis dritte Schaltstellung) kann das Schaltventil 58 entsprechend als 3/3-Wegeventil ausgebildet sein. Alternativ besteht auch die Möglichkeit, ein 2/2-Wegeventil in die erste Zuführleitung 60 und/oder in die zweite Zuführleitung 62 zu integrieren, um die erste Schaltstellung und zweite Schaltstellung zu realisieren. Die mehreren Wegeventile dienen dann als ein beziehungsweise das Schaltventil 58 der erfindungsgemäßen Brennkraftmaschine 10. Um sicherzustellen, dass in der ersten Schaltstellung des Schaltventils 58 das Erdgas ausschließlich über die Gaseinblasventile 20 und in der zweiten Schaltstellung ausschließlich über die zweite Zuführleitung 62 sowie den Venturi-Mischer 42 in den Frischgasstrang 16 eingebracht wird, sollte sowohl in die erste Zuführleitung 60 als auch in die zweite Zuführleitung 62 ein 2/2-Wegeventil integriert sein. Dabei kann auch vorgesehen sein, dass lediglich eines dieser 2/2-Wegeventile aktiv mittels der Motorsteuerung 56 ansteuerbar ist, während das andere beispielsweise als Rückschlagventil ausgebildet ist. Für die Realisierung der dritten Schaltstellung kann in den Abschnitt zwischen der Druckregelvorrichtung 50 und der Verzweigung, in der sich die Erdgasverteilerleitung 54 in die erste Zuführleitung 60 und die zweite Zuführleitung 62 aufteilt, ein weiteres 2/2-Wegeventil integriert sein.

### BEZUGSZEICHENLISTE

- 10: Brennkraftmaschine
- 12: Kraftstoffdrucktank
- 14: Verbrennungsmotor
- 16: Frischgasstrang
- 18: Luftfilter
- 20: Gaseinblasventil
- 22: Saugrohr
- 24: Abgasstrang
- 26: Umgebungsluft
- 28: Abgas
- 30: Turbine
- 32: Verdichter
- 34: Wastegate
- 36: Umluftventil
- 38: Drosselklappe
- 40: Ladeluftkühler
- 42: Venturi-Mischer
- 44: Gasführungskanal des Saugrohrs
- 46: Gasverteilerrohr
- 48: Tankregelventil
- 50: Druckregelvorrichtung
- 52: Kühlsystem
- 54: Erdgasverteilerleitung
- 56: Steuerungsvorrichtung / Motorsteuerung
- 58: Schaltventil
- 60: erste Zuführleitung
- 62: zweite Zuführleitung
- 64: Temperatursensor

## Patentansprüche

1. Brennkraftmaschine (10) mit einem für den Betrieb mit einem gasförmigen Kraftstoff vorgesehenen Verbrennungsmotor (14), dem über einen Frischgasstrang (16) Frischgas zuführbar ist, mit einem oder mehreren Kraftstoffdrucktanks (12) und mit einem oder mehreren Gaseinblasventilen (20), die über eine Druckregelvorrichtung (50) mit dem oder den Kraftstoffdrucktanks (12) verbindbar sind, ein Schaltventil (58), wobei der Kraftstoff in einer ersten Schaltstellung des Schaltventils (58) über eine erste Zuführleitung (60) zu dem/den Gaseinblasventil(en) (20) und in einer zweiten Schaltstellung über eine das/die Gaseinblasventil(e) (20) umgehende zweite Zuführleitung (62) in den Frischgasstrang (16) führbar ist, **gekennzeichnet durch** eine Steuerungsvorrichtung zur automatischen Ansteuerung des Schaltventils, wobei die Steuerungsvorrichtung derart ausgelegt ist, dass mittels dieser ein Verfahren gemäß einem der Ansprüche 7 bis 10 umsetzbar ist.

2. Brennkraftmaschine (10) gemäß Anspruch 1, **dadurch gekennzeichnet, dass** das Schaltventil (58) stromab der Druckregelvorrichtung (50) angeordnet ist.

3. Brennkraftmaschine (10) gemäß Anspruch 1 oder 2, **dadurch gekennzeichnet, dass** die zweite Zuführleitung (62) in einen in den Frischgasstrang (16) integrierten Venturi-Mischer (42) mündet.

4. Brennkraftmaschine (10) gemäß einem der vorhergehenden Ansprüche, **gekennzeichnet durch** eine dritte Schaltstellung des Schaltventils (58), in der die erste Zuführleitung (60) mit der zweite Zuführleitung (62) verbunden ist.

5. Brennkraftmaschine (10) gemäß einem der vorhergehenden Ansprüche, **dadurch gekennzeichnet, dass** der/die Kraftstoffdrucktank(s) (12) ein Tankregelventil (48) aufweisen.

6. Brennkraftmaschine (10) gemäß einem der vorhergehenden Ansprüche, **gekennzeichnet durch** eine Steuerungsvorrichtung (56) zur automatischen Ansteuerung des Schaltventils (58) und, soweit vorhanden, des/der Gaseinblasventil(e) (20), der Druckregelvorrichtung (50) und/oder des/der Tankregelventils/-e (48), wobei die Steuerungsvorrichtung (56) zur Durchführung eines Verfahrens gemäß einem der Ansprüche 7 bis 10 ausgelegt ist.

7. Verfahren zum Betreiben einer Brennkraftmaschine (10) gemäß einem der vorhergehenden Ansprüche, **dadurch gekennzeichnet, dass** der Kraftstoff dem Verbrennungsmotor (14) während eines Warmbetriebs der Brennkraftmaschine (10) ausschließlich über die erste Zuführleitung (60) sowie das/die Gaseinblasventil(e) (20) und während eines Kaltbetriebs der Brennkraftmaschine (10) ausschließlich über die zweite Zuführleitung (62) zugeführt wird.

8. Verfahren gemäß Anspruch 7, **dadurch gekennzeichnet, dass** das/die Gaseinblasventil(e) (20) während des Kaltbetriebs beheizt werden.

9. Verfahren gemäß Anspruch 8, **dadurch gekennzeichnet, dass** das/die Gaseinblasventil(e) (20) mittels ihrer Ansteuerung beheizt werden.

10. Verfahren gemäß einem der Ansprüche 7 bis 9, **dadurch gekennzeichnet, dass** während des Kaltbetriebs eine Steuerung der Menge des zugeführten Kraftstoffs durch eine entsprechende Ansteuerung der Druckregelvorrichtung (50) und/oder des/der Tankregelventile (48) erfolgt.

## Claims

1. Combustion engine (10) with an internal combustion engine (14) which is provided with a gaseous fuel for operation and to which fresh gas can be supplied via a fresh gas line (16), with one or more fuel pressure tanks (12) and with one or more gas injection valves (20) which can be connected to the fuel pressure tank(s) (12) via a pressure regulating device (50), a switching valve (58), wherein in a first switch position of the switching valve (58), the fuel can be routed to the gas injection valve(s) (20) via a first feed line (60) and, in a second switch position, can be routed into the fresh gas line (16) via a second feed line (62) bypassing the gas injection valve(s) (20), **characterized by** a control device for automatically controlling the switching valve, wherein the control device is designed in such a way that a method according to any one of Claims 7 to 10 can be implemented by means of said control device.

2. Combustion engine (10) according to Claim 1, **characterized in that** the switching valve (58) is arranged downstream of the pressure regulating device (50).

3. Combustion engine (10) according to Claim 1 or 2, **characterized in that** the second feed line (62) opens into a venturi mixer (42) integrated into the fresh gas line (16).

4. Combustion engine (10) according to any one of the preceding claims, **characterized by** a third switch position of the switching valve (58), in which the first feed line (60) is connected to the second feed line (62).

5. Combustion engine (10) according to any one of the preceding claims, **characterized in that** the fuel pressure tank(s) (12) have a tank control valve (48).

6. Combustion engine (10) according to any one of the preceding claims, **characterized by** a control device (56) for automatically controlling the switching valve (58) and, if present, the gas injection valve(s) (20), the pressure regulating device (50) and/or the tank control valve(s) (48), wherein the control device (56) is designed to carry out a method according to any one of Claims 7 to 10.

7. Method for operating a combustion engine (10) according to any one of the preceding claims, **characterized in that** during a hot operation of the combustion engine (10), the fuel is supplied to the internal combustion engine (14) exclusively via the first feed line (60) and the gas injection valve(s) (20) and during a cold operation of the combustion engine (10) exclusively via the second feed line (62).

8. Method according to Claim 7, **characterized in that** the gas injection valve(s) (20) are heated during cold operation.

9. Method according to Claim 8, **characterized in that** the gas injection valve(s) (20) are heated by means of their control.

10. Method according to any one of Claims 7 to 9, **characterized in that** during cold operation, the quantity of fuel supplied is controlled by a corresponding control of the pressure regulating device (50) and/or of the tank control valve(s) (48).

## Revendications

1. Moteur à combustion interne (10) comprenant un moteur thermique (14) destiné au fonctionnement avec un carburant gazeux, auquel un gaz frais peut être acheminé par le biais d'une ligne de gaz frais (16), comprenant un ou plusieurs réservoirs de carburant sous pression (12) et une ou plusieurs soupapes d'injection de gaz (20), qui peuvent être reliées au ou aux réservoirs de carburant sous pression (12) par le biais d'un dispositif de régulation de pression (50), une soupape de commutation (58), le carburant pouvant, dans une première position de commutation de la soupape de commutation (58), être guidé jusqu'à la ou jusqu'aux soupapes d'injection de gaz (20) par le biais d'une première conduite d'amenée (60) et pouvant, dans une deuxième position de commutation, être guidé dans la ligne de gaz frais (16) par le biais d'une deuxième conduite d'amenée (62) contournant la ou les soupapes d'injection de gaz (20), **caractérisé par** un dispositif de commande pour la commande automatique de la soupape de commutation, le dispositif de commande étant conçu pour pouvoir mettre en œuvre un procédé selon l'une quelconque des revendications 7 à 10.

2. Moteur à combustion interne (10) selon la revendication 1, **caractérisé en ce que** la soupape de commutation (58) est disposée en aval du dispositif de régulation de pression (50).

3. Moteur à combustion interne (10) selon la revendication 1 ou 2, **caractérisé en ce que** la deuxième conduite d'amenée (62) débouche dans un mélangeur à effet Venturi (42) intégré dans la ligne de gaz frais (16).

4. Moteur à combustion interne (10) selon l'une quelconque des revendications précédentes, **caractérisé par** une troisième position de commutation de la soupape de commutation (58), dans laquelle la première conduite d'amenée (60) est reliée à la deuxième conduite d'amenée (62).

5. Moteur à combustion interne (10) selon l'une quelconque des revendications précédentes, **caractérisé en ce que** le ou les réservoirs de carburant sous pression (12) présentent une soupape de régulation de réservoir (48).

6. Moteur à combustion interne (10) selon l'une quelconque des revendications précédentes, **caractérisé par** un dispositif de commande (56) pour la commande automatique de la soupape de commutation (58) et, le cas échéant, de la ou des soupapes d'injection de gaz (20), du dispositif de régulation de pression (50) et/ou de la ou des soupapes de régulation de réservoirs (48), le dispositif de commande (56) étant conçu pour l'exécution d'un procédé selon l'une quelconque des revendications 7 à 10.

7. Procédé permettant de faire fonctionner un moteur à combustion interne (10) selon l'une quelconque des revendications précédentes, **caractérisé en ce que** le carburant du moteur thermique (14) est amené, pendant un fonctionnement à chaud du moteur à combustion interne (10), uniquement par le biais de la première conduite d'amenée (60) ainsi que de la ou des soupapes d'injection de gaz (20) et, pendant un fonctionnement à froid du moteur à combustion interne (10), uniquement par le biais de la deuxième conduite d'amenée (62).

8. Procédé selon la revendication 7, **caractérisé en ce que** la ou les soupapes d'injection de gaz (20) sont chauffées pendant le fonctionnement à froid.

9. Procédé selon la revendication 8, **caractérisé en ce que** la ou les soupapes d'injection de gaz (20) sont chauffées au moyen de leur commande.

10. Procédé selon l'une quelconque des revendications 7 à 9, **caractérisé en ce que**, pendant le fonctionnement à froid, une commande de la quantité de carburant amené est effectuée par une commande correspondante du dispositif de régulation de pression (50) et/ou de la ou des soupapes de régulation de réservoir (48).
